# EUROPEAN PATENT APPLICATION

(11) **EP 3 385 087 A1**
(43) Date of publication of application: **10.10.2018**
(21) Application number: 15909661.9
(22) Date of filing: 30.11.2015
(51) Int. Cl.: B60B 19/00, B61C 15/04, H01F 7/02

(54) **MAGNETIC WHEEL**

(71) Applicant: Applus Servicios Tecnologicos, S.L., 08193 BellaTerra, Barcelona (ES)
(72) Inventor: REBOREDO LOSADA, Oscar, 15168 Sada (A Coruña) (ES)
(74) Representative: Herrero & Asociados, S.L.
(86) International application number: PCT/ES2015/070867
(87) International publication number: WO 2017/093580

(57) **Abstract**

The magnetic wheel (1) comprises a rim (2) provided with a tire (3) and a magnet (4) housed inside the rim (2), said rim (2) defining a central rotation axis (X), and it is characterized in that said magnet (4) is mounted in a swinging body (5), said swinging body (5) rotating around the central rotation axis (X) defined by the rim (2).

It enables the size to be smaller with respect to the force it contributes, and it makes the wheel lighter.

## Description

The present invention relates to a magnetic wheel that has been especially designed for vehicles that move on surfaces made of ferromagnetic material, such as, for example, iron or steel.

The invention is especially applicable to inspection and surveying vehicles that move, as commanded, on the vertical surface of large tanks, ships and other similar elements.

### Background of the invention

In order to inspect large metal tanks and ships, small vehicles are usually used to survey the structure, complementary installation, etc. thereof, which are able to move vertically on said surface, duly motorized, using wheels that are also metal as support means against the effects of gravity, generally assisted by electromagnets with suitable strength. Thus, the very wheels become a magnet that keeps them properly adhered to the metal surface on which they must move, with possibility to roll.

These wheels have a problem that fundamentally involves three aspects:
- The metal character thereof makes it so the friction coefficient with respect to the surface that is also metal on which it must move is small, which requires the use of very strong electromagnets in order to ensure the adherence thereof, which is directly proportional to the volume of the coil thereof, and consequently to the weight of all of them, which negatively affects the vehicle which is forced to move a larger load. This is especially important in vertical movements.
- The rigidity of the rolling surface thereof, also derived from the metal nature thereof, creates problems in the movement of the vehicle, specifically when it has been welded or has any other type of irregularities that commonly exist in the walls of the tank or element on which said vehicle must move, thereby losing adherence and not being able to overcome it.
- The dependence on a power source, specifically on the battery of the vehicle, implies a risk from a safety point of view, apart from significant energy consumption.

Document US-A-5 220 869 describes a wheel for vehicles of this type.

Furthermore, the holder of the present application designed the magnetic wheel described in WO2004074011A1, which comprises a magnetic ring, the movement of which is produced by rotation, the rotation axis being the rolling point in order to always be close to the rolling surface. Although this magnetic wheel meets the proposed objectives, the objective of the present invention is to reduce the weight and the size of the magnet, thereby improving the reliability and durability of the magnetic wheel.

### Description of the invention

The magnetic wheel of the invention solves the drawbacks mentioned and has other advantages which are described below.

The magnetic wheel according to the present invention comprises a rim provided with a tire and a magnet housed inside the rim, said rim defining a central rotation axis, and it is characterized in that said magnet is mounted in a swinging body, said swinging body rotating around the central rotation axis defined by the rim.

Advantageously, said magnet is disc-shaped. Furthermore, said swinging body preferably comprises a bearing for the rotation thereof around the central rotation axis defined by the rim.

According to a preferred embodiment, said magnet is mounted inside a housing of the swinging body, and furthermore, said rim is preferably made from a single piece and is covered on the rolling surface thereof by means of said tire, which is also made from a single piece.

Regarding the magnetic wheel described in document WO2004074011A1, the magnetic wheel according to the present invention has the following advantages:
- The wheel according to the present invention has a disc-shaped magnet, not a ring-shaped one, which makes it smaller with respect to the force it provides. This makes the new wheel slightly lighter than the old one.
- In the previous wheel, the movement of the magnet (in order to always stay close to the rolling surface) is produced by rotation, the rotation axis being the rolling point. In the wheel according to the present invention, the movement of the magnet is produced by a rotation of the magnet with respect to the geometric axis of the wheel. This makes it possible to use a bearing, which facilitates the movement of the swinging body-magnet system, preventing it from getting stuck in a certain position when dirt and traces of rust accumulate inside of it. Therefore, with the wheel according to the present invention, the reliability and durability of the system are improved.

- Between the slots and the edges of the tire of the previous wheel, slippage can be produced between the rim and the tire, given that it is the area where the tensile stress is transmitted and, furthermore, it is the disassembly area of the wheel in the case that maintenance needs to be performed inside of it. In the wheel according to the present invention, this problem does not exist because the rim and the tire are secured together in a single part.
- When the previous magnetic wheel lifts off from the ferromagnetic surface, the magnet tends to come out of the housing thereof due to the fact that the only thing that contains it is the tire, causing it to be stretched. However, in the magnetic wheel according to the present invention the magnet is confined by means of the inner swinging body which is fastened by a roller, for which reason no degradation or stretching of the tire is produced.
- The support of the previous wheel is produced due to the pressure that the magnet exerts directly on the tire with respect to the rolling surface. However, the support of the wheel according to the present invention is produced because the attraction force of the magnet is transmitted to the axis of the wheel, by means of the inner swinging body, which makes it so that the wheel is in contact with the ferromagnetic surface, a pressure also being produced by the tire on the rolling surface.

### Brief description of the drawings

For the purpose of making the above more readily understandable, it is accompanied by a set of drawings which, schematically and by way of illustration and not limitation, represent an embodiment.
Figure 1 is a perspective view of the outside of the magnetic wheel according to the present invention;
Figure 2 is a perspective view of the inside of the magnetic wheel according to the present invention; and
Figure 3 is a perspective view of a cross section of the inside of the magnetic wheel according to the present invention.

### Description of a preferred embodiment

As seen in the figures, the magnetic tire according to the present invention, generally indicated by the reference number 1, comprises a rim 2 made from a single piece upon the rolling surface of which a tire 3 is mounted, which is also made from a single piece.

Said rim 2 defines a central rotation axis X, for the rotation of the wheel 1 by means of the drive axis 8 of a vehicle.

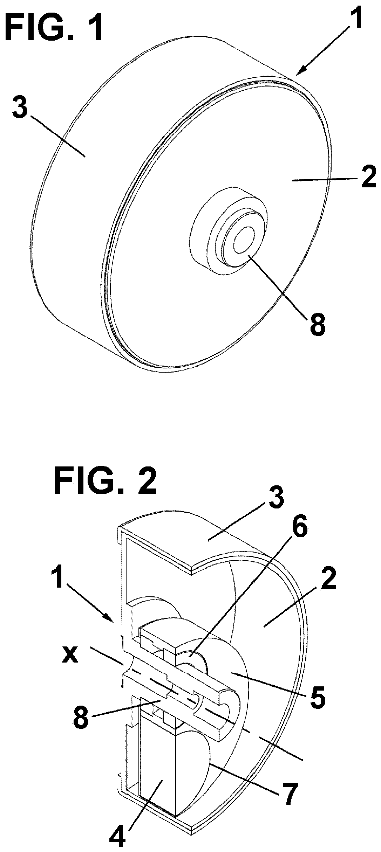

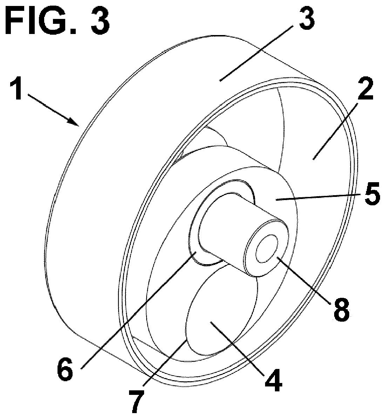

Furthermore, the tire 1 according to the present invention comprises a magnet 4 that is mounted in a swinging body 5, which rotates around said central rotation axis X defined by said tire 2. In order to enable said rotation of the swinging body 5, it comprises a bearing 6, as seen in particular in Figures 2 and 3.

Said magnet 4, which is preferably disc-shaped, is advantageously placed inside a housing 7 of the swinging body 5.

In this manner, the support of the wheel 1 according to the present invention is produced because the force of attraction of the magnet 4 is transmitted to the axis X, by means of the inner swinging body 5, which makes it so the wheel 1 is in contact with the ferromagnetic surface on which the wheel is moved, a pressure also being produced by the tire 3 on the rolling surface.

Despite the fact that reference has been made to a specific embodiment of the invention, it is evident to the person skilled in the art that numerous variations and changes may be made to the magnetic wheel described, and that all the aforementioned details may be substituted by other technically equivalent ones, without detracting from the scope of protection defined by the attached claims.

## Claims

1. A magnetic wheel (1), comprising a rim (2) provided with a tire (3) and a magnet (4) housed inside the rim (2), said rim (2) defining a central rotation axis (X), **characterized in that** said magnet (4) is mounted in a swinging body (5), said swinging body (5) rotating around the central rotation axis (X) defined by the rim (2).

2. The magnetic wheel (1) according to claim 1, in which said magnet (4) is disc-shaped.

3. The magnetic wheel (1) according to claim 1, in which said swinging body (5) comprises a bearing (6) for the rotation thereof around the central rotation axis (X) defined by the rim (2).

4. The magnetic wheel (1) according to claim 1 or 2, in which said magnet (4) is mounted inside a housing (7) of the swinging body (5).

5. The magnetic wheel (1) according to claim 1, in which said rim (2) is made from a single piece, and it is covered on the rolling surface thereof by means of said tire (3), which is also made from a single piece.
